# EUROPEAN PATENT SPECIFICATION

(11) **EP 4 260 675 B1**
(45) Date of publication and mention of the grant of the patent: **04.09.2024**
(21) Application number: 23164268.7
(22) Date of filing: 27.03.2023
(51) Int. Cl.: A01D 34/00, A01D 34/78, A01D 34/81, B60K 17/22, B62D 7/14, A01D 34/69

(54) **ROBOT LAWNMOWER WITH DRIVING MOTOR BLOCK ADAPTED TO DETECT AN OBSTACLE**
ROBOTERRASENMÄHER MIT ANTRIEBSMOTORBLOCK ZUR ERKENNUNG EINES HINDERNISSES
TONDEUSE À GAZON ROBOTISÉE AVEC BLOC MOTEUR D'ENTRAÎNEMENT CONÇU POUR DÉTECTER UN OBSTACLE

(30) Priority: 11.04.2022 IT 202200007139
(43) Date of publication of application: 18.10.2023
(73) Proprietor: Stiga S.p.A. in breve anche St. S.p.A., 31033 Castelfranco Veneto (TV) (IT)
(72) Inventor: VILLANOVA, Mr. Marco, SERNAGLIA DELLA BATTAGLIA (TV) (IT); FIOR, Roberto, CASTELFRANCO VENETO (TV) (IT)
(74) Representative: Mittler, Andrea

(56) References cited:
- EP-A1- 3 338 530
- EP-A1- 3 791 708
- EP-A2- 1 532 856
- FR-A1- 3 069 812
- US-A1- 2007 260 370
- US-A1- 2015 245 559

## Description

The present invention relates to a robot lawnmower with a driving motor block adapted to detect an obstacle.

Robot lawnmowers provided with sensors which detect impact with animals, things or people, and with lifting sensors of the robot lawnmower itself, are known.

The impact sensors are necessary to stop the robot lawnmower in the event of impact and then ensure it changes travelling direction, while the lifting sensors serve to stop the rotation of the blade for safety reasons if the robot lawnmower is lifted during the working step.

In order to detect impact with animals, people or things, robot lawnmowers are commonly provided with a fluctuating cover which, in the event of impact, moves with respect to the base frame, informing the robot lawnmower by means of sensors and making it stop travelling and then change the direction thereof.

EP-3395148 describes means for detecting impact with obstacles of the movable cover type, with spring means associated with the base frame of the robot lawnmower.

US-2021/0270338 describes means for detecting impact with obstacles of the movable cover type, wherein the movement of the movable cover with respect to the base frame is signaled by magnets.

Disadvantageously, the obstacle impact detection means with a movable cover are costly, complex to make and keep efficient.

Robot lawnmowers with fixed cover (therefore not provided with fluctuating cover) which use the reading of the current on the driving motors to stop the travel in the event of impact, and as above, then change the direction of travel, are also known. The disadvantage of this solution is that the impact is significant and before stopping, the wheels tend to skid, ruining the yard; moreover, being significant, the force of impact is perceived as being unpleasant by people or animals.

In addition to collision sensors, WO-2021/206606 describes obstacle detection means of the visual type, i.e., by means of camera, and the use of ultrasound sensors and radar.

Another type of robot lawnmower with a flexible transmission is known from FR3069812A1.

With regard to the lifting, the detection of the robot lawnmower occurs by means of sensors when the movable cover moves in vertical direction, thus allowing the sensors to intervene, which perceive the movement thereof in vertical direction with respect to the base frame.

Instead, in case of a fixed cover, the lifting sensor may intervene by means of a vertical movement of the axis of the front wheels, also provided with a specific sensor.

It is the object of the present invention to provide a robot lawnmower with a fixed cover provided with means for detecting obstacles, wherein the response of the driving wheels of the robot lawnmower is faster.

It is a further object of the present invention for the detection means to be affordable and simple to assemble on the robot lawnmower.

It is a further object again of the present invention for the detection means not to make more difficult the detection of the lifting of the robot lawnmower, which is useful for blocking the cutting blade for safety reasons.

According to the invention, said and further objects are achieved by a robot lawnmower comprising a base frame, a cover integral with the base frame, two driving wheels and at least one directional idler wheel, wherein each driving wheel is driven by an electric motor,
wherein
each motor comprises a motor block rotatably fixed to a bracket to which the respective driving wheel is rotatably fixed,
wherein the robot lawnmower comprises absorbing means of a bump of the robot lawnmower, wherein the absorbing means are adapted to allow the rotation of the motor block with respect to the base frame in the case of a bump in the direction of motion of the robot lawnmower,
wherein the absorbing means comprise elastic means adapted to keep the motor block in a position of equilibrium with respect to the bracket in the absence of bumps,
said robot lawnmower further comprising at least one sensor fixed to the base frame and adapted to detect said rotation of the motor block with respect to the base frame, and a control unit adapted to block and reverse the motion of the driving wheels following the detection of said rotation of the motor block with respect to the base frame.

Advantageously, the use of the elastic means allows a quick response and an effective damping effect: the robot lawnmower is not damaged and quickly resumes working in a different direction without skidding the wheels on the yard.

The configuration of the absorbing means allows a similar behavior both in the event of a front bump and in the event of a rear bump.

The robot lawnmower according to the present invention is simple to assemble, with obstacle impact detection means directly associated with the motor block, in which the axis of the driving wheels is fixed at the translation in the direction of motion with respect to the base frame.

To detect the impact therefore, it is not necessary for the cover to be movable with respect to the base frame: it is sufficient for the motor block to be rotatable with respect to the bracket.

The elastic means serve a dual purpose: they control the blocking of the driving wheels and dampen impact.

These and other features of the present invention will become more apparent from the following detailed description of practical embodiments thereof shown by way of non-limiting examples in the accompanying drawings, in which:
Figure 1 shows a perspective view of a robot lawnmower according to the present invention;
Figure 2 shows a side view of the robot lawnmower;
Figure 3 shows a top plan view of the robot lawnmower;
Figure 4 shows a sectional view according to line IV-IV of Figure 3;
Figure 5 shows a top plan view of the robot lawnmower in a rear bump position of the robot lawnmower;
Figure 6 shows the enlarged content of circle B of Figure 5;
Figure 7 shows the enlarged content of circle A of Figure 1;
Figure 8 shows a view similar to the one of Figure 7, in a rear bump position of the robot lawnmower;
Figure 9 shows a sectional view according to line IX-IX of Figure 5;
Figure 10 shows a perspective view of a motor unit of the robot lawnmower;
Figure 11 shows a side view of the motor unit in a working position of the robot lawnmower;
Figure 12 shows a view similar to the one of Figure 11, in a lifted position of the robot lawnmower.

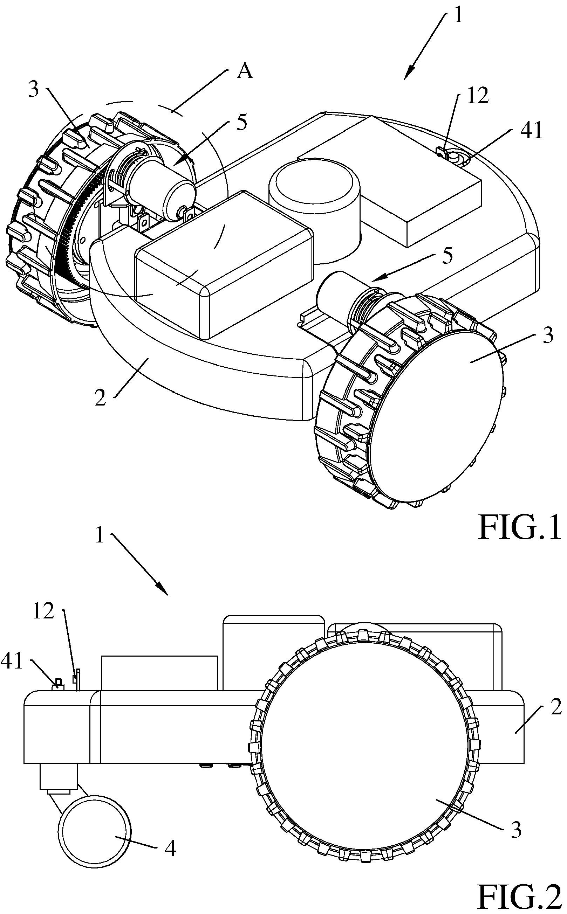

A robot lawnmower 1 comprises a base frame 2, a cover (not shown) associated with the base frame 2, two driving wheels 3 and at least one directional idler wheel 4 (Figures 1-3).

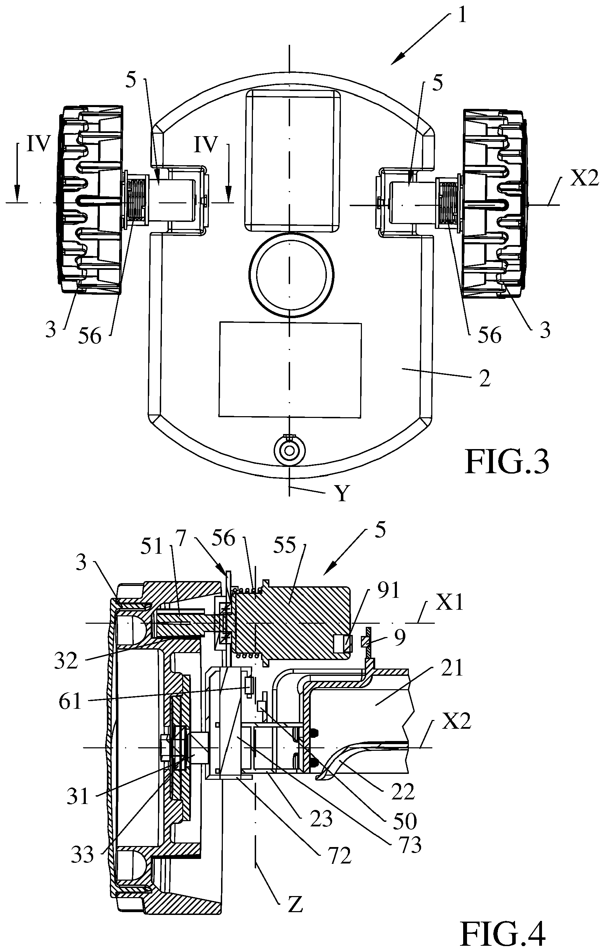

Each driving wheel 3 is driven by a respective motor 5 of the electric type by means of a pinion 51 which meshes with a ring gear 32 of the driving wheel 3 (Figure 4).

Motor 5 comprises a motor block 55 rotatably fixed to a bracket 7.

The driving wheel 3 is also rotatably fixed to bracket 7 by means of a hub 31 which is integral with bracket 7 and extends outwards from bracket 7, as shown in Figure 4, for example.

The base frame 2, which provides a compartment 21 for a cutting plate 22, comprises one or more cutting blades.

The axis of hub 31 corresponds to the rotation axis X2 of the driving wheel 3, in which the driving wheel 3 is rotatably mounted on hub 31 by means of a bearing 33 (Figure 4).

The motor block 55 is adapted to rotate around a rotation axis X1 which preferably corresponds to the rotation axis of pinion 51.

Preferably, the rotation axis X1 is parallel to the rotation axis X2 of the driving wheel 3 but is separate therefrom, i.e., motor 5 is not aligned with the driving wheel 3, i.e., motor 5 is off-axis with respect to the driving wheel 3.

Pinion 51 naturally is adapted to rotate with respect to the motor block 55 which is kept in equilibrium in a working position by a spring 56 which preferably is placed around a portion of the motor block 55 closest to bracket 7.

Working position means a position of the motor block 55 which allows the movement and cutting of the robot lawnmower 1.

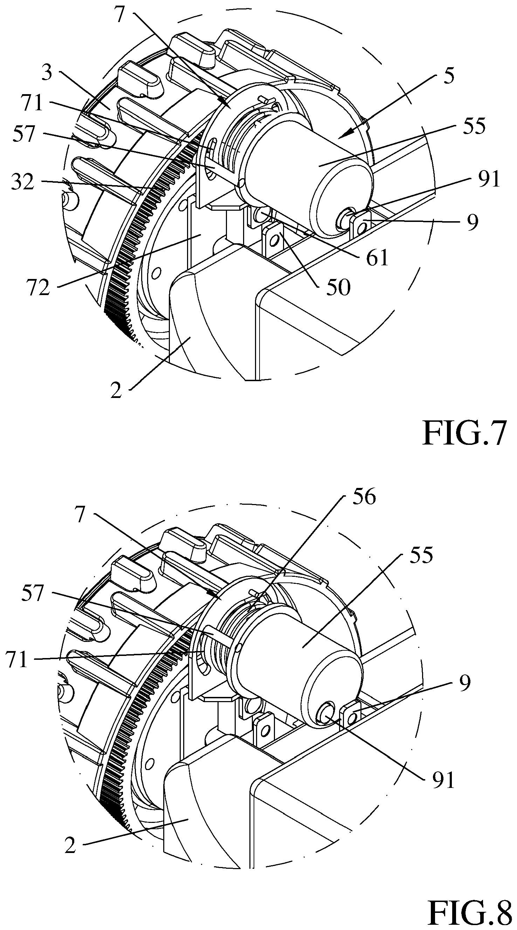

The motor block 55 comprises two pins 57 adapted to slide in two curved guides 71 of bracket 7 (Figure 7).

When the motor block 55 is in said working position, the pins 57 are in a middle position in the curved guides 71.

Preferably, bracket 7 extends upwards so that motor 5 can be mounted in a high position of bracket 7, extending inwards, above the base frame 2, in particular above compartment 21.

The driving wheel 3, driven in rotation by pinion 51 which meshes with the ring gear 32, rotates on hub 31 which is fixed to bracket 7. Alternatively, hub 31 may be integral with the driving wheel 3 and rotate with respect to bracket 7, i.e., the position of the bearing 33 may vary, motor 5 in any case remaining off-axis.

Advantageously, the sizes of compartment 21 in which the cutting plate 22 is accommodated are not affected by the presence of the motors 5 adapted to drive the driving wheels 3.

Therefore, the robot lawnmower 1 may be designed with the cutting plate 22 centered between the driving wheels 3, with an optimal distribution of the weight and reduced longitudinal sizes of the robot lawnmower 1.

The motion of the robot lawnmower 1 may occur along a rectilinear trajectory, for example, along a motion axis Y (Figure 3), or along a curved trajectory along every point of which a component may in any case always be identifiable along the motion axis Y.

The direction of the motion axis Y is orthogonal to the direction of the rotation axis X2 of the driving wheels 3.

The rotation axes X2 and the motion axis Y identify an operating plane of the robot lawnmower 1 parallel to the ground on which the robot lawnmower 1 moves. The curved trajectory in any case is included in the operating plane of the robot lawnmower 1.

The motion axis Y coincides with the rectilinear direction of motion of the robot lawnmower 1 when the directional idler wheel 4 is aligned with the driving wheels 3.

In the embodiment shown, the direction of the motion axis Y corresponds to the longitudinal direction of the robot lawnmower 1, i.e., the direction of motion of the robot lawnmower 1 when the directional idler wheel 4 is oriented as the driving wheels 3 so that the robot lawnmower 1 moves forwards or backwards in rectilinear manner.

For example, the motion axis Y may be horizontal, i.e., the robot lawnmower 1 moves on a horizontal plane (ground).

Bracket 7 is integral with the base frame 2 in the direction of the motion axis Y, while it may slide in the direction of a lifting axis Z (Figures 4, 10-12) between a high position and a low position. The high position preferably is the one with maximum height.

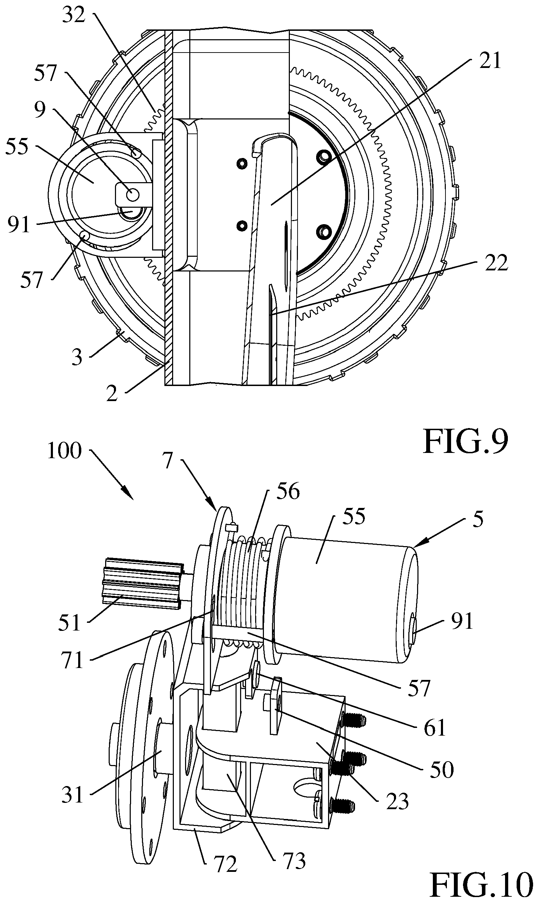

With particular reference to Figures 10-12, bracket 7 comprises a C-shaped profile 72 and a body 73 extending in the direction of the lifting axis Z between two ends of the C-shaped profile 72.

Body 73 is slidably fixed in the direction of the lifting axis Z at a block 23 which is integral with frame 2.

Bracket 7 may slide with respect to frame 2 in the direction of the lifting axis Z by virtue of said sliding fixing of body 73 with block 23.

Bracket 7 therefore is movable between said high position and low position with respect to block 23, i.e., with respect to frame 2.

The lifting axis Z is orthogonal to the operating plane, i.e., to both the rotation axes X2 and to the motion axis Y.

Usually, the lifting axis Z is vertical, i.e., the robot lawnmower 1 moves on a horizontal plane (ground).

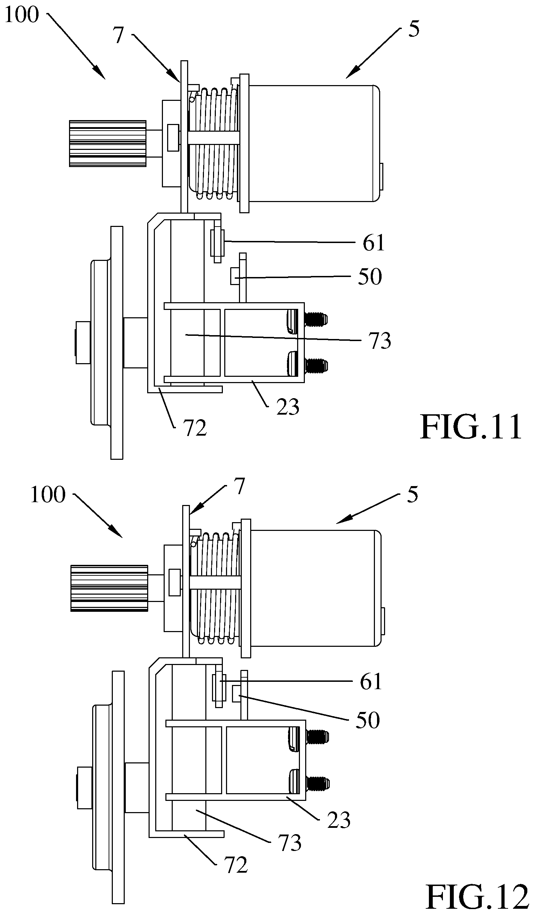

The high position of the bracket 7 (Figure 11) corresponds to the working position of the robot lawnmower 1 in which a blade is enabled to the cut motion, while the low position of bracket 7 corresponds to a lifting position of the robot lawnmower 1 in which the blade is not enabled to the cut motion for safety reasons.

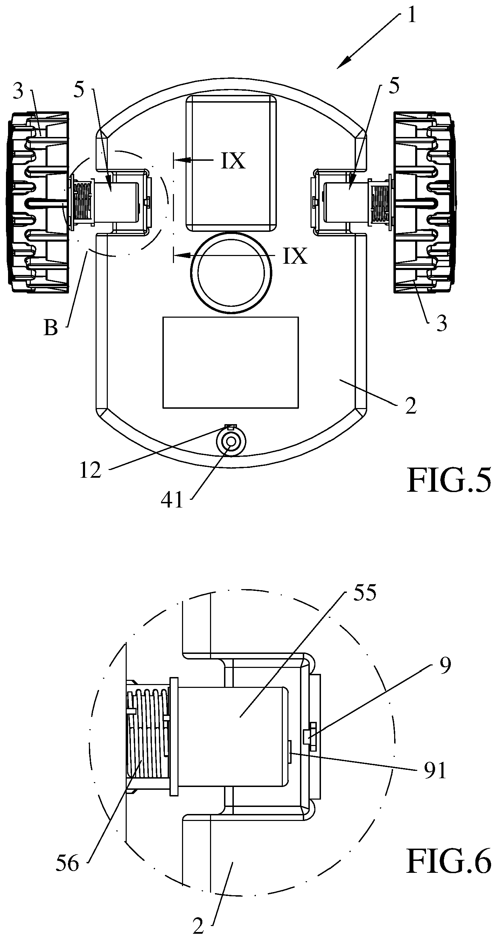

The motor block 55 is rotatably fixed to bracket 7 so as to protrude above the base frame 2 towards a sensor 9 (Figure 7) integral with the base frame 2 and adapted to detect the rotation of the motor block 55 around the rotation axis X1 with respect to bracket 7 (Figures 5, 6, 8, 9).

Sensor 9 comprises a switch, is adapted to detect the movement of a magnet 91 integral with the motor block 55 and controls the blocking and subsequent reversal of motion of the driving wheel 3 that is driving by means of a control unit of the robot lawnmower 1.

A further sensor 50, similar to sensor 9, detects the movement along the lifting axis Z of the base frame 2 in the event the robot lawnmower 1 is lifted, in which a magnet 61 (Figures 4, 10-12) integral with bracket 7 interacts with said sensor 50 integral with the base frame 2. For example, sensor 50 is fixed above block 23 and magnet 61 is fixed to an upper end of the C-shaped profile 72 of bracket 7.

The movement along the lifting axis Z is also detected by a further sensor 12 again, similar to the sensors 9, 50, which is at the directional idler wheel 4 (Figures 1 and 2). More specifically, a pin 41, integral with the directional idler wheel 4 along the lifting axis Z, is adapted to slide with respect to the base frame 2 between a high position and a low position. The high position preferably is the one with maximum height.

Similar to the positions defined for bracket 7, only if sensor 12 detects pin 41 in the high position is blade enabled for the cut motion. Sensor 50 detects magnet 61 in front of itself in such a position. The enabling of the blade is therefore controlled by two independent sensors 12, 50 so as to increase the safety of the user.

Operatively, during the regular working motion, the robot lawnmower 1 provides for the pins 57 of the motor block 55 to be in the middle position of the curved guides 71 (Figure 7), except for small oscillations comprised within a predefined threshold value in the control unit. Bracket 7 and pin 41 of the directional idler wheel 4 are in the high position: the blade is enabled for the cut motion.

When the robot lawnmower 1 hits an obstacle and the motor block 55 rotates around the rotation axis X1 past said predefined threshold value, the control unit controls the stopping of the robot lawnmower 1 and the reversal of the motion of the driving wheels 3. Following the bump, the control unit may also block the blade and restart it only after the reversal of motion.

Following the bump, the pins 57 move from said middle position of the curved guides 71 to a side position of the curved guides 71.

Figures 5, 6, 8 and 9 show the case in which the motor block 55 rotates in clockwise direction, i.e., in the event of a rear bump. The rotation is inverse in the event of a front bump.

Advantageously, the use of the springs 56 allows a quick response and an effective damping effect: the robot lawnmower 1 is not damaged and quickly resumes working in a different direction without skidding the wheels on the yard.

The configuration of the springs 56, with the pins 57 in the middle of the curved guides 71 in working position, allows a similar behavior both in the event of a front bump and in the event of a rear bump.

The motor block 55 is simple to fix to bracket 7 and the springs 56 are easily accessible from the outside for possible replacement.

The springs 56, or equivalent elastic means, may also be internal because they do not require frequent adjustment and/or replacement, probably never during the life of the robot lawnmower 1: the fact that they are internal gives them increased protection against damage by foreign bodies.

The means adapted to block the blade following lifting are simple to couple to the obstacle detection means.

The sensors 9, 12, 50 are fixed to the base frame 2, well protected by the cover.

The sensors 9, 12, 50 are known movement sensors which are independently controlled by the control unit.

Sensor 9 could be capable of also detecting a movement along the lifting axis Z, therefore rendering useless the sensors 12 and 50, which in turn may be alternative.

The robot lawnmower 1 according to the present invention is simple to assemble, with obstacle impact detection means directly associated with the motor block 55, in which the axis of the driving wheels 3 is fixed at the translation in the direction of the motion axis Y with respect to the base frame 2.

To detect the impact therefore, it is not necessary for the cover to be movable with respect to the base frame 2: it is sufficient for the motor block 55 to be rotatable with respect to bracket 7, in particular around a rotation axis X1 parallel to the rotation axis X2 of the driving wheels 3.

The springs 56 serve a dual purpose: they control the blocking of the driving wheels 3 and dampen impact.

The springs 56, together with the pins 57 and the curved guides 71, constitute absorbing means of the bump of the robot lawnmower 1 with an obstacle.

The bump absorbing means, together with means adapted to allow the lifting associated with bracket 7, form a motor unit 100 shown in Figures 10- 12.

The components used for the detection means are commercially known and easy to find on the market. The position in which said components are assembled makes maintenance and possible replacement simple.

The elastic means have to keep the motor block 55 in a position of equilibrium, preferably but not exclusively with the pins 57 in a middle position of the curved guides 71.

In an alternative embodiment, motor 5 is aligned with the driving wheels 3, i.e., the rotation axis X1 of the motor block 55 coincides with the rotation axis X2 of the driving wheels 3.

## Claims

1. Robot lawnmower (1) comprising a base frame (2), a cover integral with the base frame (2), two driving wheels (3) and at least one directional idler wheel (4), wherein each driving wheel (3) is driven by an electric motor (5),
**characterized in that**
each motor (5) comprises a motor block (55) rotatably fixed to a bracket (7) to which the respective driving wheel (3) is rotatably fixed,
wherein the robot lawnmower (1) comprises absorbing means (56, 57, 61) of a bump of the robot lawnmower (1), wherein the absorbing means (56, 57, 61) are adapted to allow the rotation of the motor block (55) with respect to the base frame (2) in the case of a bump in the direction of motion of the robot lawnmower (1),
wherein the absorbing means (56, 57, 61) comprise elastic means (56) adapted to keep the motor block (55) in a position of equilibrium with respect to the bracket (7) in the absence of bumps,
said robot lawnmower (1) further comprising at least one sensor (9) fixed to the base frame (2) and adapted to detect said rotation of the motor block (55) with respect to the base frame (2), and a control unit adapted to block and reverse the motion of the driving wheels (3) following the detection of said rotation of the motor block (55) with respect to the base frame (2).

2. Robot lawnmower (1) according to claim 1, **characterized in that** the motor block (55) is kept in said equilibrium position by a spring (56) which is placed around a portion of the motor block (55),
wherein the motor block (55) comprises two pins (57) adapted to slide in two curved guides (71) of the bracket (7),
wherein the pins (57) are adapted to slide in the curved guides (71) in two directions depending on whether the bump is frontal or rear.

3. Robot lawnmower (1) according to claim 1 or 2, **characterized in that** the motor block (55) is adapted to rotate around a rotation axis (X1) parallel to the rotation axis (X2) of the driving wheel (3).

4. Robot lawnmower (1) according to any one of the preceding claims, **characterized in that** the sensor (9) comprises a switch and is adapted to detect the movement of a magnet (91) integral with the motor block (55).

5. Robot lawnmower (1) according to any one of the preceding claims, **characterized in that** it comprises lifting means adapted to allow the sliding of the absorbing means (56, 57, 71) along a lifting axis (Z) between a high position and a low position, wherein the high position corresponds to the working position of the robot lawnmower (1) in which a blade is enabled for the cut motion, while the low position corresponds to a lifting position of the robot lawnmower (1) in which the blade is disabled for the cut motion for safety reasons.

6. Robot lawnmower (1) according to claim 5, **characterized in that** it comprises a further sensor (12, 50) suitable for detecting the movement of the absorbing means (56, 57, 71) along the lifting axis (Z) with respect to the base frame (2), wherein the control unit is adapted to enable the cut motion of the blade (20) only in the case in which the absorbing means (56, 57, 71) are in the high position .

7. Robot lawnmower (1) according to claim 5 or 6, **characterized in that** the bracket (7) comprises a C-shaped profile (72) and a body (73) extending in the direction of the lifting axis (Z) between two ends of the C-shaped profile (72), wherein the body (73) is slidably fixed in the direction of the lifting axis (Z) to a block (23) integral with the base frame (2).

## Patentansprüche

1. Roboterrasenmäher (1), der einen Basisrahmen (2), eine mit dem Basisrahmen (2) integral gebildete Abdeckung, zwei Antriebsräder (3) und mindestens ein direktionales Laufrad (4) aufweist, wobei jedes Antriebsrad (3) von einem Elektromotor (5) angetrieben wird,
**dadurch gekennzeichnet, dass**
jeder Motor (5) einen Motorblock (55) aufweist, der drehbar an einer Halterung (7) befestigt ist, an der das entsprechende Antriebsrad (3) drehbar befestigt ist,
wobei der Roboterrasenmäher (1) Absorptionseinrichtungen (56, 57, 61) für Stöße des Roboterrasenmähers (1) aufweist, wobei die Absorptionseinrichtungen (56, 57, 61) dazu ausgelegt sind, eine Drehung des Motorblocks (55) in Bezug auf den Basisrahmen (2) im Falle eines Stoßes in der Bewegungsrichtung des Roboterrasenmähers (1) zu ermöglichen,
wobei die Absorptionseinrichtungen (56, 57, 61) eine elastische Einrichtung (56) aufweisen, die dazu ausgelegt ist, den Motorblock (55) in einer Gleichgewichtsposition in Bezug auf die Halterung (7) zu halten, wenn keine Stöße vorhanden sind,
wobei der Roboterrasenmäher (1) ferner mindestens einen Sensor (9), der an dem Basisrahmen (2) befestigt und dazu ausgelegt ist, die Drehung des Motorblocks (55) in Bezug auf den Basisrahmen (2) zu detektieren, und eine Steuereinheit, die dazu ausgelegt ist, die Bewegung der Antriebsräder (3) nach dem Detektieren der Drehung des Motorblocks (55) in Bezug auf den Basisrahmen (2) zu blockieren und umzukehren, aufweist.

2. Roboterrasenmäher (1) nach Anspruch 1, **dadurch gekennzeichnet, dass** der Motorblock (55) durch eine Feder (56), die um einen Teil des Motorblocks (55) herum angeordnet ist, in der Gleichgewichtsposition gehalten wird,
wobei der Motorblock (55) zwei Stifte (57) aufweist, die dazu ausgelegt sind, in zwei gekrümmten Führungen (71) der Halterung (7) zu gleiten,
wobei die Stifte (57) dazu ausgelegt sind, in den gekrümmten Führungen (71) in Abhängigkeit davon, ob der Stoß vorne oder hinten auftritt, in zwei Richtungen zu gleiten.

3. Roboterrasenmäher (1) nach Anspruch 1 oder 2, **dadurch gekennzeichnet, dass** der Motorblock (55) dazu ausgelegt ist, sich um eine Drehachse (X1) parallel zu der Drehachse (X2) des Antriebsrads (3) zu drehen.

4. Roboterrasenmäher (1) nach einem der vorhergehenden Ansprüche, **dadurch gekennzeichnet, dass** der Sensor (9) einen Schalter aufweist und dazu ausgelegt ist, die Bewegung eines mit dem Motorblock (55) integral gebildeten Magneten (91) zu detektieren.

5. Roboterrasenmäher (1) nach einem der vorhergehenden Ansprüche, **dadurch gekennzeichnet, dass** er eine Hebeeinrichtung aufweist, die dazu ausgelegt ist, das Gleiten der Absorptionseinrichtungen (56, 57, 71) entlang einer Hebeachse (Z) zwischen einer hohen Position und einer niedrigen Position zu ermöglichen, wobei die hohe Position der Arbeitsposition des Roboterrasenmähers (1) entspricht, in der einer Klinge die Schnittbewegung ermöglicht wird, während die niedrige Position einer Hebeposition des Roboterrasenmähers (1) entspricht, in der der Klinge die Schnittbewegung aus Sicherheitsgründen nicht ermöglicht wird.

6. Roboterrasenmäher (1) nach Anspruch 5, **dadurch gekennzeichnet, dass** er einen weiteren Sensor (12, 50) aufweist, der dafür geeignet ist, die Bewegung der Absorptionseinrichtungen (56, 57, 71) entlang der Hebeachse (Z) in Bezug auf den Basisrahmen (2) zu detektieren, wobei die Steuereinheit dazu ausgelegt ist, die Schnittbewegung der Klinge (20) nur in dem Fall zu ermöglichen, in dem sich die Absorptionseinrichtungen (56, 57, 71) in der hohen Position befinden.

7. Roboterrasenmäher (1) nach Anspruch 5 oder 6, **dadurch gekennzeichnet, dass** die Halterung (7) ein C-förmiges Profil (72) und einen Körper (73) aufweist, der sich in Richtung der Hebeachse (Z) zwischen zwei Enden des C-förmigen Profils (72) erstreckt, wobei der Körper (73) in Richtung der Hebeachse (Z) gleitbar an einem mit dem Basisrahmen (2) integral gebildeten Block (23) befestigt ist.

## Revendications

1. Tondeuse à gazon robotisée (1) comprenant un châssis de base (2), une couverture solidaire avec le châssis de base (2), deux roues motrices (3) et au moins une roue folle directionnelle (4), dans laquelle chaque roue motrice (3) est entraînée par un moteur électrique (5),
**caractérisée en ce que** :
chaque moteur (5) comprend un bloc moteur (55) fixé, de manière rotative, à un support (7) auquel la roue motrice (3) respective est fixée, de manière rotative,
dans laquelle la tondeuse à gazon robotisée (1) comprend des moyens d'absorption (56, 57, 61) d'une bosse de la tondeuse à gazon robotisée (1), dans laquelle les moyens d'absorption (56, 57, 61) sont adaptés pour permettre la rotation du bloc moteur (55) par rapport au châssis de base (2) dans le cas d'une bosse dans la direction de déplacement de la tondeuse à gazon robotisée (1),
dans laquelle les moyens d'absorption (56, 57, 61) comprennent des moyens élastiques (56) adaptés pour maintenir le bloc moteur (55) dans une position d'équilibre par rapport au support (7) en l'absence de bosses,
ladite tondeuse à gazon robotisée (1) comprenant en outre au moins un capteur (9) fixé sur le châssis de base (2) et adapté pour détecter ladite rotation du bloc moteur (55) par rapport au châssis de base (2) et une unité de contrôle adaptée pour bloquer et inverser le déplacement des roues motrices (3) suite à la détection de ladite rotation du bloc moteur (55) par rapport au châssis de base (2).

2. Tondeuse à gazon robotisée (1) selon la revendication 1, **caractérisée en ce que** le bloc moteur (55) est maintenu dans ladite position d'équilibre par un ressort (56) qui est placé autour d'une partie du bloc moteur (55),
dans laquelle le bloc moteur (55) comprend deux broches (57) adaptées pour coulisser dans deux guides courbés (71) du support (7),
dans laquelle les broches (57) sont adaptées pour coulisser dans les guides courbés (71) dans deux directions selon si la bosse est frontale ou postérieure.

3. Tondeuse à gazon robotisée (1) selon la revendication 1 ou 2, **caractérisée en ce que** le bloc moteur (55) est adapté à tourner autour d'un axe de rotation (X1) parallèle à l'axe de rotation (X2) de la roue motrice (3).

4. Tondeuse à gazon robotisée (1) selon l'une quelconque des revendications précédentes, **caractérisée en ce que** le capteur (9) comprend un interrupteur et est adapté pour détecter le déplacement d'un aimant (91) solidaire avec le bloc moteur (55).

5. Tondeuse à gazon robotisée (1) selon l'une quelconque des revendications précédentes, **caractérisée en ce qu'**elle comprend des moyens de levage adaptés pour permettre le coulissement des moyens d'absorption (56, 57, 71) le long d'un axe de levage (Z) entre une position haute et une position basse, dans laquelle la position haute correspond à la position de travail de la tondeuse à gazon robotisée (1), dans laquelle une lame est activée pour le mouvement de coupe, alors que la position basse correspond à une position de levage de la tondeuse à gazon robotisée (1) dans laquelle la lame est désactivée pour le mouvement de coupe pour des raisons de sécurité.

6. Tondeuse à gazon robotisée (1) selon la revendication 5, **caractérisée en ce qu'**elle comprend un autre capteur (12, 50) approprié pour détecter le mouvement des moyens d'absorption (56, 57, 71) le long de l'axe de levage (Z) par rapport au châssis de base (2), dans laquelle l'unité de contrôle est adaptée pour activer le mouvement de coupe de la lame (20) uniquement dans le cas dans lequel les moyens d'absorption (56, 57, 71) sont dans la position haute.

7. Tondeuse à gazon robotisée (1) selon la revendication 5 ou 6, **caractérisée en ce que** le support (7) comprend un profil en forme de C (72) et un corps (73) s'étendant dans la direction de l'axe de levage (Z) entre deux extrémités du profil en forme de C (72), dans lequel le corps (73) est fixé, de manière coulissante, dans la direction de l'axe de levage (Z) à un bloc (23) solidaire avec le châssis de base (2).
